# EUROPEAN PATENT SPECIFICATION

(11) **EP 2 626 459 B1**
(45) Date of publication and mention of the grant of the patent: **16.10.2019**
(21) Application number: 13153943.9
(22) Date of filing: 05.02.2013
(51) Int. Cl.: D06F 37/20, D06F 37/30, H02K 1/12

(54) **Motor and washing machine having the same**
Motor und Waschmaschine damit
Moteur et lave-linge pourvu de ce dernier

(30) Priority: 07.02.2012 KR 20120012212
(43) Date of publication of application: 14.08.2013
(73) Proprietor: Samsung Electronics Co., Ltd., Gyeonggi-do 443-742 (KR)
(72) Inventor: Bang, Myung Bae, Gyeonggi-do (KR); Yoon, Keun Young, Gyeonggi-do (KR); Lee, Sung Gu, Gyeonggi-do (KR); In, Byung Ryel, Gyeonggi-do (KR); Jeong, Su Kwon, Gyeonggi-do (KR); Hwang, Woong, Gyeongi-do (KR); Kim, Young Kwan, Gyeonggi-Do (KR)
(74) Representative: Grünecker Patent- und Rechtsanwälte PartG mbB

(56) References cited:
- EP-A1- 1 580 311
- EP-A1- 2 202 342
- EP-A2- 1 550 758
- WO-A2-2006/083083
- WO-A2-2008/010674

## Description

### BACKGROUND

### 1. Field

Embodiments relate to a motor configured to generate rotational force, and a washing machine having the same.

### 2. Description of the Related Art

A washing machine is an apparatus configured to wash clothes by use of power, and in general, includes a tub to store washing water, a drum rotatably installed at an inside the tub, and a motor configured to rotatably drive the drum.

The motor is an apparatus configured to obtain rotational force from electric energy, and includes a stator and a rotor. The rotor is configured to electromagnetically interact with the stator, and is rotated by the force acting in between a magnetic field and the current that flows at coils.

In general, the stator is fixed to a rear wall of the tub by use of a plurality of fixing pins and bolts. The fixing pins are configured to determine the position of the stator, and the bolts are configured to fix the stator, the position of which is determined by the fixing pin, to a rear wall of the tub.

The stator is provided with fixing pins, separately formed from penetration holes into which the bolts are inserted. In the case as such, in processing the fixing pins and penetration holes, due to a processing error, the stator may not be able to be fixed at a right position, and thus a concentricity defect may be occurred between the stator and the rotor, thereby resulting in a decreased performance and a difference in the performance of the motor. In a case when the concentricity defect is severe, interference between the rotor and the stator may be occurred.

WO 2006/083083 A2 discloses a driving apparatus for a washing machine. Such washing machine comprises a cabinet and a tub disposed in the cabinet. A drum is centrally disposed in the tub and said drum is rotatable. A motor including a rotor and a stator is arranged at the rear of the tub wherein the stator is fixedly mounted to a rear wall of the tub and the rotor which surrounds the stator is connected to the drum by a corresponding drum shaft extending through the tub. The stator is fixed to a rear wall of the tub with a number of coupling portions and a plurality of uniform spaced positioning holes. Further, the stator is then firmly mounted to the rear wall of the tub by fastening both through the coupling holes of the stator.

It is an object of the present invention to provide a washing machine with a motor having an improved structure to prevent water from penetrating into an inner side of the motor, wherein the motor further has an improved structure to enhance productivity and assembly performance.

This object is solved by the features of claim 1.

The at least one fixing rib may include a plurality of fixing ribs separated from each other and disposed in the circumferential direction of the stator body, and may protrude from one side surface of the stator body toward the rear surface of the tub, and the at least one fixing pin may include a plurality of fixing pins and each fixing pin may protrude from each fixing rib toward the rear surface of the tub.

The tub may include a support rib protruded from the rear surface of the tub toward a rear side, and configured to support the stator by making contact with the at least one fixing rib when the stator is in a fixed state. The at least one first accommodation hole and the at least one second accommodation hole may be formed at the support rib.

The stator may include a stator body having a circular-shape, a plurality of stator teeth, a coil and at least one water penetration prevention member. The plurality of stator teeth may be arranged in a circumferential direction of the stator body. The coil may be wound around the plurality of stator teeth. The at least one water penetration prevention member may be protruded from the stator body and configured to prevent water from penetrating into the coil.

The at least one water penetration prevention member may include a first water penetration prevention rib and a second water penetration prevention rib. The first water penetration prevention rib may be protruded from one surface of the stator body that faces the rear surface of the tub toward the rear surface of the tub when the stator is fixed to the rear surface of the tub. The second water penetration prevention rib may be protruded from the other surface of the stator body opposite to the one surface of the stator body in an opposite direction to the first water penetration prevention rib when the stator is fixed to the rear surface of the tub.

The at least one water penetration prevention member may be disposed in the circumferential direction of the stator body.

The stator includes a stator body having a circular-shape, a plurality of stator teeth, a coil and a connector housing. The plurality of stator teeth may be arranged in a circumferential direction of the stator body. The coil may be wound around the plurality of stator teeth. The connector housing may be integrally formed with the stator body and into which a connector configured to supply power to the coil is inserted.

The stator may include a stator body having a circular-shape, a plurality of stator teeth, a coil and at least one water penetration prevention member. The plurality of stator teeth may be arranged in a circumferential direction of the stator body. The coil may be wound around the plurality of stator teeth. The at least one water penetration prevention member may be protruded from the stator body and configured to prevent water from penetrating into the coil. The rotor may be rotatably disposed at an inner side of the stator.

The at least one water penetration prevention member may include a first water penetration prevention rib and a second water penetration prevention rib. The first water penetration prevention rib may be protruded from one surface of the stator body that faces the rear surface of the tub toward the rear surface of the tub when the stator is fixed to the rear surface of the tub. The second water penetration prevention rib may be protruded from the other surface of the stator body opposite to the one surface of the stator body in an opposite direction of the first water penetration prevention rib when the stator is fixed to the rear surface of the tub.

The at least one water penetration prevention member may be disposed in the circumferential direction of the stator body.

The washing machine may further include at least one fixing rib protruded from one side surface of the stator body toward the rear surface of the tub. The fixing rib may be disposed at an outer side of the first water penetration prevention rib in a radial direction of the stator body.

The stator may include a stator core, an insulator, a coil and a connector housing. The insulator may cover the stator core. The coil may be wound around the insulator. The connector housing may be integrally formed with the insulator and into which a connector configured to supply power to the coil is inserted. The rotor may be rotatably disposed at an inner side or at an outer side of the stator.

The insulator may include an upper insulator and a lower insulator that are configured to cover the stator core from an upper side and a lower side thereof, respectively. The connector housing may be integrally formed with one of the upper insulator and the lower insulator.

The washing machine may further include connection terminals formed of metal configured to electrically connect the coil to the connector. The connection terminals may be inserted into the insulator.

As described above, a fixing pin configured to determine the position of a stator is concentrically disposed with a fixing hole, into which a fixing member configured to fix the stator, so that the stator is fixed to a determined position at all times, and thereby the concentricity defect between the stator and a rotor is prevented.

Since the water that falls from an upper portion of a tub is guided to an outer side of coils along a water penetration prevention rib formed at a stator, a short circuit caused by the penetration of water is prevented.

Since a connector housing, into which a connector configured to supply power to coils is inserted, is integrally formed with a stator, the cost of separately molding the connector housing is saved, and the process of assembling the separately-molded connector housing to the stator is omitted, and thereby the productivity and assembly performance are enhanced.

In addition, the durability of a motor is enhanced.

### BRIEF DESCRIPTION OF THE DRAWINGS

These and/or other aspects of the disclosure will become apparent and more readily appreciated from the following description o embodiments, taken in conjunction with the accompanying drawings of which:
FIG. 1 is a drawing illustrating a washing machine in accordance with an embodiment;
FIG. 2 is a drawing illustrating a stator and a rotor of a motor in accordance with one embodiment of the present disclosure, the stator illustrated as being separated from the rotor;
FIG. 3 is an enlarged view of 'B' portion of FIG. 2;
FIG. 4 is a drawing illustrating an appearance of the stator of FIG. 2 seen from a different angle;
FIG. 5 is an enlarged view of 'C' portion of FIG. 4;
FIG. 6 is a cross-sectional view illustrating a coupling relationship between a tub and the stator;
FIG. 7 is an enlarged view of 'A' portion of FIG. 1; and
FIG. 8 is an exploded perspective view illustrating an exploded structure of the stator.

### DETAILED DESCRIPTION

Reference will now be made in detail to embodiments of the present disclosure, examples of which are illustrated in the accompanying drawings, wherein like reference numerals refer to like elements throughout.

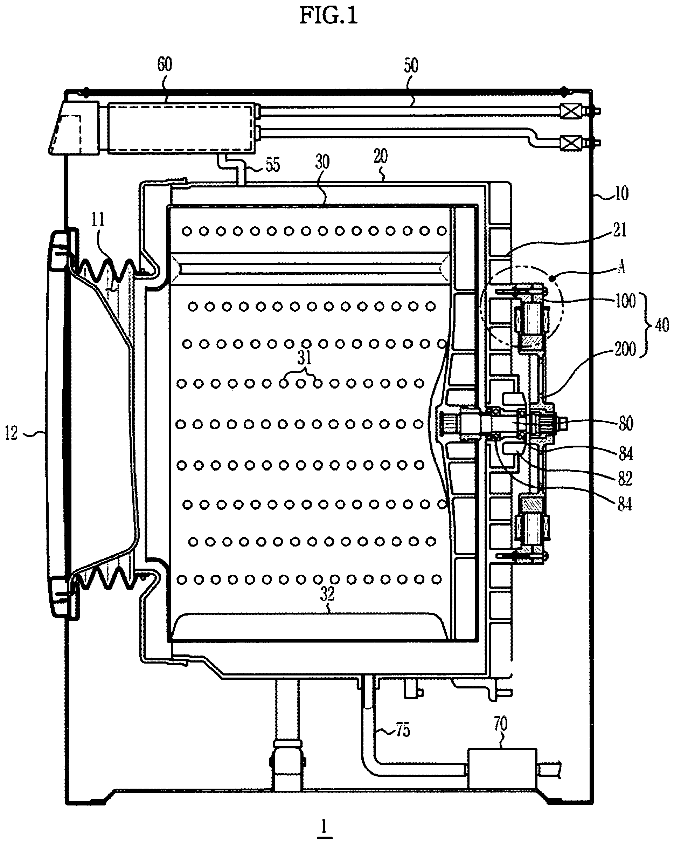

FIG. 1 is a drawing illustrating a washing machine in accordance with an embodiment.

As illustrated on FIG. 1, a washing machine 1 includes a cabinet 10, a tub 20 disposed at an inside the cabinet 10, a drum 30 rotatably disposed at an inside the tub 20, and a motor 40 rotatably driving the drum 30.

At a front surface portion of the cabinet 10, an inlet 11 is formed so that a laundry may be inserted into an inside the drum 30. The inlet 11 is open/closed by a door 12 installed at the front surface portion of the cabinet 10.

At an upper portion of the tub 20, a water supply pipe 50 is installed to supply washing water to the tub 20. One side of the water supply pipe 50 is connected to an outside water supply source (not shown), and the other side of the water supply pipe 50 is connected to a detergent supply apparatus 60. The detergent supply apparatus 60 is connected to the tub 20 through a connection pipe 55. The water being supplied through the water supply pipe 50 passes through the detergent supply apparatus 60, and then is supplied to an inside the tub 20 along with detergent.

At a lower portion of the tub 20, a drain pump 70 and a drain pipe 75 configured to discharge the water at an inside the tub 20 to an outside the cabinet 10.

At the circumference of the drum 30, a plurality of penetration holes 31 is formed to circulate the washing water, and at the inner circumferential surface of the drum 30, a plurality of lifters 32 is installed so that the ascension and the descension of the laundry may take place when the drum 30 is rotated.

The drum 30 is connected to the motor 40 through a driving shaft 80. The driving shaft 80 is configured to deliver the rotational force of the motor 40 to the drum 30. One end portion of the driving shaft 80 is connected to the drum 30, and the other end portion of the driving shaft 80 is extended to an outer side of a rear wall 21 of the tub 20.

At the rear wall 21 of the tub 20, a bearing housing 82 is installed to rotatably support the driving shaft 80. The bearing housing 82 may be formed of aluminum alloy, and may be inserted into the rear wall 21 of the tub 20 when the tub 20 is injection-molded. In between the bearing housing 82 and the driving shaft 80, bearings 84 are installed so that the driving shaft 80 may be smoothly rotated.

Hereinafter, a structure and a principle of the motor 40 being mounted at the rear wall 21 of the tub 20 will be described in detail.

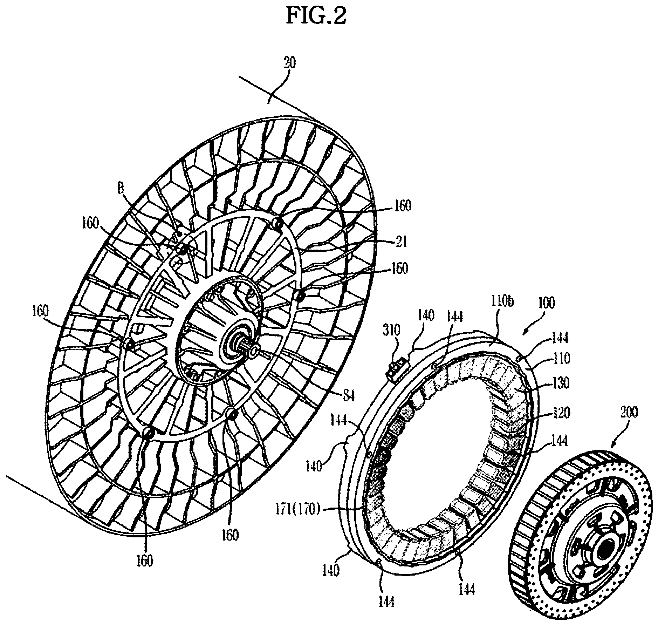

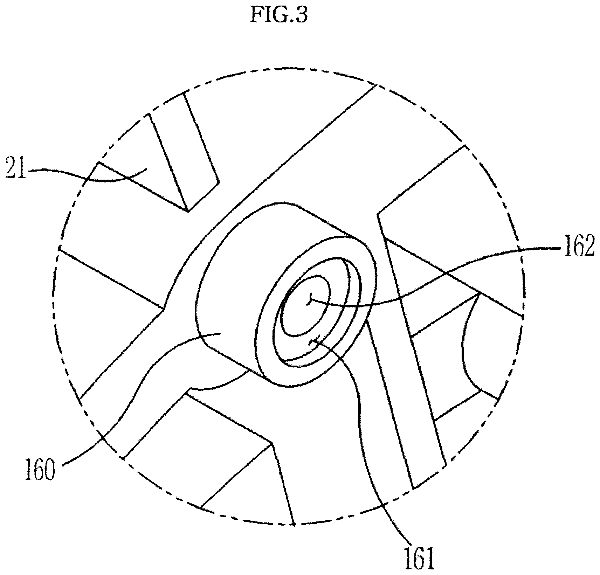

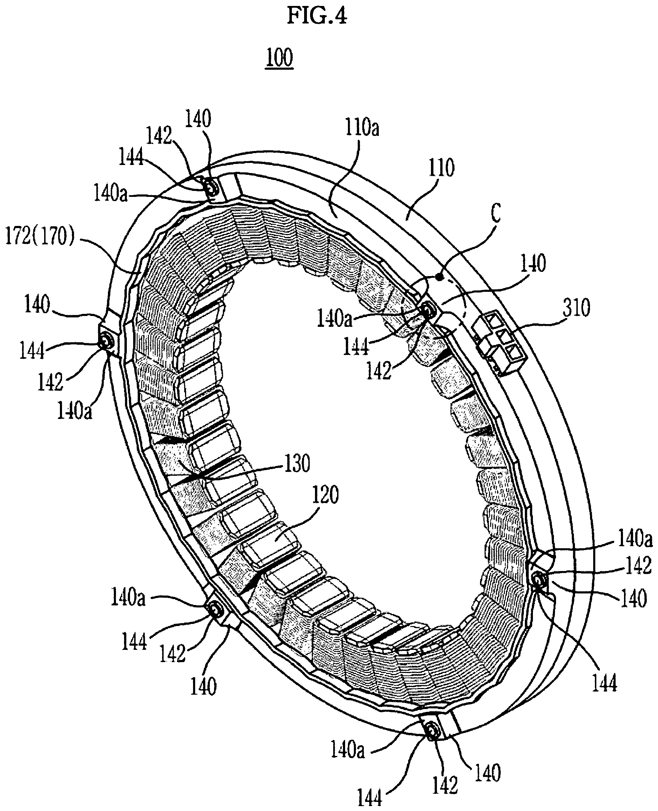

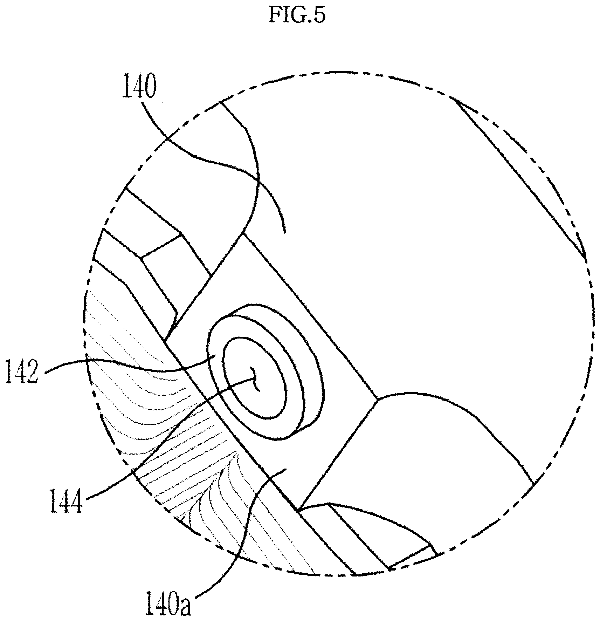

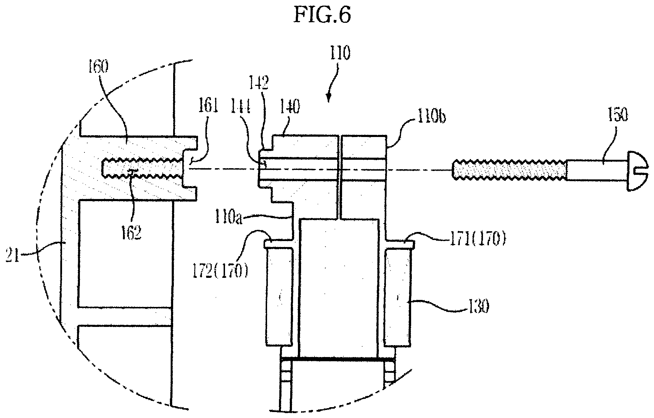

FIG. 2 is a drawing illustrating a stator and a rotor of a motor in accordance with one embodiment of the present disclosure, the stator illustrated as being separated from the rotor. FIG. 3 is an enlarged view of 'B' portion of FIG. 2. FIG. 4 is a drawing illustrating an appearance of the stator of FIG. 2 seen from a different angle. FIG. 5 is an enlarged view of 'C' portion of FIG. 4. FIG. 6 is a cross-sectional view illustrating a coupling relationship between a tub and the stator. The motor in accordance with one embodiment of the present disclosure includes an inner-rotor type in which the rotor is disposed at an inner side of the stator, and an outer-rotor type in which the rotor is disposed at an outer side of the stator, and hereinafter, for the sake of convenience, the description will be provided based on the inner-rotor type motor.

As illustrated on FIGS. 1 to 6, the motor 40 is coupled to an outer side of the tub 20, and rotates the drum 30 in both directions by providing driving force to the drum 30. The motor 40 includes a stator 100 mounted at the rear wall 21 of the tub 20, and a rotor 200 disposed around the stator 100 and configured to be rotated by electromagnetically interacting with the stator 100.

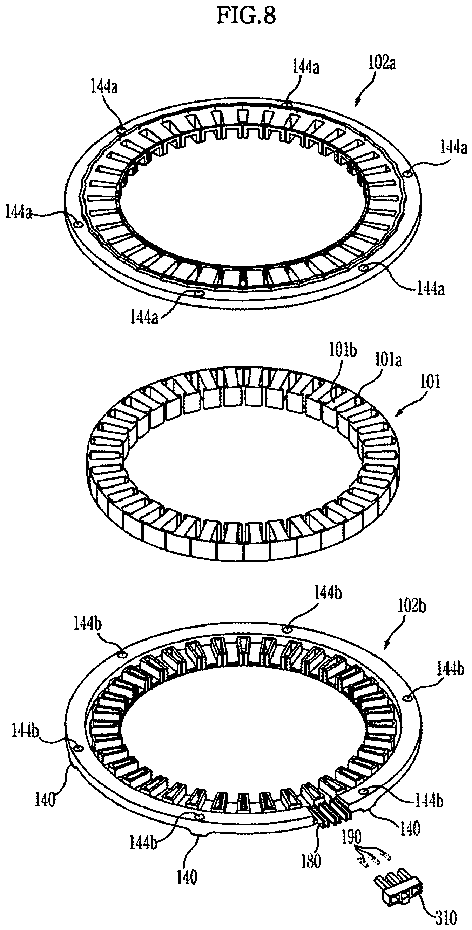

The stator 100 includes a stator body 110 in a circular shape, which is formed by coupling a stator core 101 of metallic material with insulators 102a and 102b that cover the stator core 101 from an upper side and a lower side of the stator core 101 (refer to FIG. 8), a plurality of stator teeth 120 arranged in a circumferential direction of the stator body 110, a coil 130 wound around the plurality of stator teeth 110, a plurality of fixing ribs 140, a plurality of fixing pins 142, and a plurality of fixing holes 144 configured to fix the stator 100 to the rear wall 21 of the tub 20.

The stator body 110 is configured to support the plurality of stator teeth 120. The plurality of stator teeth 120 is protruded in a radial structure in a direction facing a center of the stator body 110 from an inner circumferential surface of the stator body 110, and is arranged in a circumferential direction of the stator body 110 while being spaced apart from each other.

The plurality of fixing ribs 140 are protrudedly formed in a predetermined length toward the rear wall 21 of the tub 20 from one side surface 110a of the stator body 110 facing the rear wall 21 of the tub 20, and are disposed while being spaced apart from each other by a predetermined distance in a circumferential direction of the stator body 110.

The plurality of fixing pins 142 is protruded in a predetermined length toward the rear wall 21 of the tub 20 from one surface 140a of the plurality of fixing ribs 140 facing the rear wall 21 of the tub 20. The plurality of fixing pins 142, while being inserted into the rear wall 21 of the tub 20, is configured to determine the position of the stator 100 prior to fixing the stator 100 to the rear wall 21 of the tub 20.

Each of the fixing hole 144 is concentrically disposed with each of the fixing pins 142, and is formed by penetrating through a center of the fixing pin 142, through a portion of the stator body 110 at which the center of the fixing pin 142 is positioned, and through the fixing rib 140. A fixing member 150 such as bolts is fixed to the rear wall 21 of the tub 20 through the fixing hole 144.

The plurality of fixing ribs 140, the plurality of fixing pins 142, and the plurality of fixing holes 144 may be integrally formed with each other at the insulators 102a and 102b in the process of injection-molding the insulators 102a and 102b.

A support rib 160configured to support the stator 100 by making contact with the fixing rib 140 while in a state that the stator 100 is mounted at the rear wall 21 of the tub 20, a first accommodation holes 161 through which the fixing pin 142 is insertedly accommodated, and a second accommodation hole 162 concentrically disposed with the first accommodation hole 161 are provided at the rear wall 21 of the tub 20 at which the stator 100 is mounted.

The support rib 160 is protruded toward a rear direction from the rear wall 21 of the tub 20, and is formed at the rear wall 21 of the tub 20 at a position corresponding to the fixing rib 140 so as to make contact with the fixing ribs 140 while in a state that the stator 100 is mounted.

The first accommodation hole 161 is configured to accommodate the fixing pin 142, so that the position of the stator 100 may be determined before the stator 100 is fixed to the rear wall 21 of the tub 20, while the second accommodation hole 162 is configured to accommodate the fixing member 150 such as a bolt, so that the stator 100 may be fixed to the rear wall 21 of the tub 20. The second accommodation hole 162 may be provided with a smaller diameter when compared to the first accommodation hole 161.

The first accommodation hole 161 and the second accommodation hole 162 may be integrally formed with each other at the tub 20 in the process of injection-molding the tub 21.

As the above, since the fixing pin 142 and the fixing hole 144 are concentrically positioned with each other, when an injection mold of the insulators 102a and 102b forming the stator body 110is manufactured, a tool configured to process the fixing pin 142 and the fixing hole 144 may be able to simultaneously process the fixing pin 142 and the fixing hole 144 at one position, and thus the processing position error of the fixing pin 142 and the fixing hole 144 may be decreased. In the same manner, since the first accommodation hole 161 and the second accommodation hole 162 corresponding to the fixing pin 142 and the fixing hole 144, respectively, are concentrically positioned with each other, when an injection mold of the tub 20 is being manufactured, a tool configured to process the first accommodation hole 161 and the second accommodation hole 162 may be able to simultaneously process the first accommodation hole 161 and the second accommodation hole 162 at one position, and thus the processing position error of the first accommodation hole 161 and the second accommodation hole 162 may be decreased. Thus, since the stator 100 is fixed to a constant position at the rear wall 21 of the tub 20 at all times, the concentricity error between the stator 100 and a rotor 200 is prevented, and the durability of the motor 40 is enhanced.

Hereinafter, a structure of preventing a phenomenon in which water is penetrated into the coils 130 in a state when the stator 100 is mounted at the rear wall 21 of the tub 20 will be described.

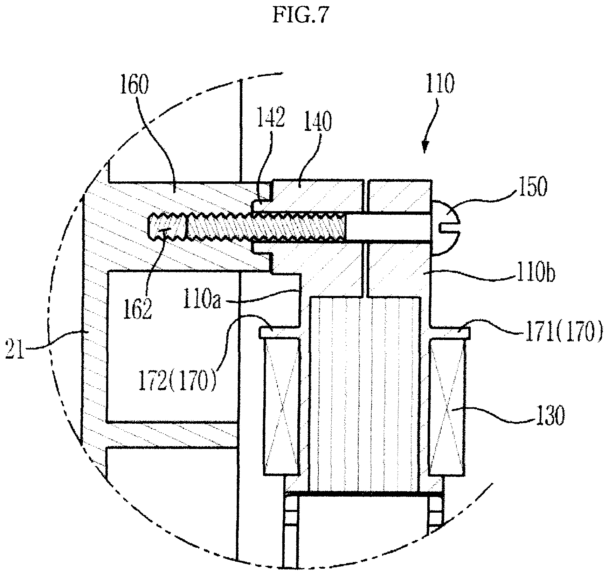

FIG. 7 is an enlarged view of 'A' portion of FIG. 1.

As illustrated on FIG. 1, FIG. 2, FIG. 4, and FIG. 7, the stator 100 includes at least one water penetrating prevention member 170 protruded from the stator body 110 to prevent water from being penetrated to the coil 130.

The water penetrating prevention member 170 includes a first water penetrating prevention rib 171 protruded toward the rear wall 21 of the tub 20 from the one side surface 110a of the stator body 110 facing the rear wall 21 of the tub 20 in a state when the stator 100 is fixed to the rear wall 21 of the tub 20, and a second water penetrating prevention rib 172 protruded toward an opposite direction of the first water penetrating prevention rib 171 from the other end surface 110b that is opposite to the one side surface 110a of the stator body 110.

The first water penetrating prevention rib 171 and the second water penetrating prevention rib 172 are each disposed in the circumferential direction of the stator 100, and are provided at an inner side in a radial direction of the stator 100 when compared to the fixing ribs 140.

The length in which the first water penetrating prevention rib 171 is protruded is needed to be shorter than the length in which the fixing rib 140 is protruded. If the length in which the first water penetrating prevention member 171 is protruded is longer than the length in which the fixing rib 140 is protruded, in the process of mounting the stator 100, the first water penetration prevention rib 171 may make contact with the rear wall 21 of the tub 20 before the fixing rib 140 makes contact with the rear wall 21, and thus the fixing rib 140 may not make contact with the support rib 160.

In addition, the first water penetrating prevention rib 171 and the second water penetrating prevention rib 172 may be integrally formed with the insulators 102a and 102b in the process of injection-molding the insulator 102a and 102b.

In a washing process, the water that is reached at an upper portion of the stator 100 by falling or being scattered from an upper portion of the tub 20 flows down toward a lower portion of the stator 100 along the surface of the first water penetrating prevention rib 171 or the second water penetrating prevention rib 172, and thus the penetration of the water into the coil 130 is prevented in advance.

FIG. 8 is an exploded perspective view illustrating an exploded structure of the stator.

As illustrated on FIG. 2, FIG. 4, and FIG. 8, the stator 100 includes the stator core 101 including a core body 101a having an inner circumferential surface and an outer circumferential surface, and a plurality of core teeth 101b protruded in a radial structure toward a direction facing a center of the core body 101a from the inner circumferential surface of the core body 101a, and the upper and the lower insulators 102a and 102b covering an outer side of the stator core 101. The stator core 101 may be formed in a method of stacking press-processed metal sheets.

The upper insulator 102a and the lower insulators 102b includes a plurality of penetration holes 144a and a plurality of penetrating holes 144b, respectively, the plurality of penetration holes 144a and the plurality of penetrating holes 144b forming the fixing holes 144 when the upper and the lower insulators 102a and 102b are coupled to each other, and the plurality of fixing ribs 140 and the plurality of fixing pins 142 are formed at one of the upper insulator 102a and the lower insulator 102b.

In addition, the upper and the lower insulators 102a and 102b are formed of the material having electrical insulation characteristic, and a connector housing 180 into which a connector 310, which is configured to supply power to the coil 130 wound at the upper and the lower insulators 102a and 102b for current to flow, is inserted at one of the upper and the lower insulators 102a and 102b. The connector housing 180is integrally injection-molded with one of the upper and the lower insulators 102a and 102b in the process of injection-molding the upper and the lower insulators 102a and 102b.

Connection terminals 190 having metallic material that electrically connect the coil 130 to the connector 310 are inserted into the connector housing 180, and the connection terminals 190 may be inserted into the connector housing 180 in the process of injection-molding the upper and the lower insulators 102a and 102b.

As the above, by having the connector housing 180 integrally injection-molded with one of the upper and the lower insulators 102a and 102b, the cost of separately manufacturing the connector housing 180 is decreased, and since the process of assembling the connector housing 180 to the stator 100 is omitted, the productivity is enhanced.

Although a few embodiments of the present disclosure have been shown and described, it would be appreciated by those skilled in the art that changes may be made in these embodiments without departing from the principles of the disclosure, the scope of which is defined in the claims.

## Claims

1. A washing machine (1), comprising:
a body (10);
a tub (20) disposed inside the body (10);
a drum (30) rotatably disposed inside the tub (20); and
a motor (40) coupled to a rear surface (21) of the tub (20) to drive the drum (30),
wherein the motor (40) comprises:
a stator (100) and a rotor (200) rotatably disposed at an inner side or at an outer side of the stator (100)
said stator (100) comprising at least one fixing pin (142) inserted into the rear surface of the tub (20)
said stator (100) further comprising at least one fixing hole (144b) concentrically disposed with the at least one fixing pin (142), said tub (20) comprising:
at least one first accommodation hole (161) in which the fixing pin (142) is insertedly accommodated; and
at least one second accommodation hole (162) concentrically disposed with at least one first accommodation hole (161), and configured to communicate with the at least one fixing hole (141) in a state that the at least one fixing pin (142) is insertedly accommodated in the at least one first accommodation hole (161), and said washing machine (1) further comprising at least one fixing member (150) configured to fix the stator (100) to the rear surface (21) of the tub (20),
wherein the at least one fixing member (150) is fixedly accommodated in the second accommodation hole (162) after passing through the at least one fixing hole (161),
wherein the stator (100) comprises:
a stator body (110) having a circular-shape; and
at least one fixing rib (140) disposed in a circumferential direction of the stator body (110), and protruded from one side surface of the stator body (110) toward the rear surface of the tub (20),
wherein the at least one fixing pin (142) protrudes from the at least one fixing rib (140) toward the rear surface of the tub (20), and
wherein the at least one fixing hole (144b) is formed by penetrating through a center of the at least one fixing pin (142), through a portion of the stator body (110) at which the center of the at least one fixing pin (142) is positioned, and through the at least one fixing rib (140).

2. The washing machine (1) of claim 1, wherein the tub (20) comprises a support rib (160) protruded from the rear surface (21) of the tub toward a rear side, and configured to support the stator (100) by making contact with the at least one fixing rib (140) when the stator (100) is in a fixed state, wherein the at least one first accommodation hole (161) and the at least one second accommodation hole (162) are formed at the support rib (160).

3. The washing machine (1) of claim 1, wherein the stator (100) comprises:
a stator body (110) having a circular-shape;
a plurality of stator teeth (120) arranged in a circumferential direction of the stator body (110);
a coil (130) wound around the plurality of stator teeth (120); and
at least one water penetration prevention member (170) protruded from the stator body (110) and configured to prevent water from penetrating into the coil (130).

4. The washing machine (1) of claim 3, wherein the at least one water penetration prevention member (170) comprises:
a first water penetration prevention rib (171) protruded from one surface of the stator body (110) that faces the rear surface (21) of the tub (20) toward the rear surface (21) of the tub (20) when the stator (100) is fixed to the rear surface (21) of the tub (20); and
a second water penetration prevention rib (172) protruded from the other surface of the stator body (110) opposite to the one surface of the stator body (110) in an opposite direction to the first water penetration prevention rib (171) when the stator (100) is fixed to the rear surface (21) of the tub (20).

5. The washing machine (1) of claim 3, wherein the at least one water penetration prevention member (170) is disposed in the circumferential direction of the stator body (110).

6. The washing machine (1) of claim 1, wherein the stator (100) comprises:
a stator body (110) having a circular-shape;
a plurality of stator teeth (120) arranged in a circumferential direction of the stator body (110);
a coil (130) wound around the plurality of stator teeth (120); and
a connector housing (180) integrally formed with the stator body (110) and into which a connector (310) configured to supply power to the coil (130) is inserted.

7. The washing machine (1) of claim 1, wherein the stator (100) comprises:
a stator core (101);
an insulator (102a, 102b) covering the stator core (101);
a coil (130) wound around the insulator (102a, 102b); and
a connector housing (180) integrally formed with the insulator (102b) and into which a connector (310) configured to supply power to the coil (130) is inserted.

8. The washing machine (1) of claim 7, wherein:
the insulator (102a, 102b) comprises an upper insulator (102a) and a lower insulator (102b) that are configured to cover the stator core (101) from an upper side and a lower side thereof, respectively, and
the connector housing (180) is integrally formed with one of the upper insulator (102a) and the lower insulator (102b).

9. The washing machine (1) of claim 8, further comprising connection terminals (190) formed of metal configured to electrically connect the coil (130) to the connector (310), wherein the connection terminals (130) are inserted into the insulator (102a, 102b).

## Patentansprüche

1. Waschmaschine (1), welche aufweist:
einen Körper (10);
einen innerhalb des Körpers (10) angeordneten Waschbottich (20);
eine innerhalb des Waschbottichs (20) drehbar angeordnete Trommel (30); und
einen mit einer Rückseite (21) des Waschbottichs (20) zum Antreiben der Trommel (30) gekoppelten Motor (40), wobei der Motor (40) aufweist:
einen Stator (100) und einen drehbar auf einer Innenseite oder einer Außenseite des Stators (100) angeordneten Rotor (200), wobei der Stator (100) wenigstens einen Fixierstift (142) aufweist, der in die Rückseite des Waschbottichs (20) eingesetzt ist, und wobei der Stator (100) weiterhin wenigstens eine Fixieröffnung (144b) aufweist, die konzentrisch zu dem wenigstens einen Fixierstift (142) angeordnet ist, wobei der Waschbottich (20) aufweist:
wenigstens eine erste Aufnahmeöffnung (161), in welcher der Fixierstift (142) eingesetzt aufgenommen ist, und wenigstens eine zweite Aufnahmeöffnung (162) konzentrisch angeordnet zur wenigstens einen ersten Aufnahmeöffnung (161) und ausgebildet zur Verbindung mit der wenigstens einen Fixieröffnung (141) in einem Zustand, in dem der wenigstens eine Fixierstift (142) eingesetzt in der wenigstens einen ersten Aufnahmeöffnung (161) aufgenommen ist, und wobei die Waschmaschine (1) weiterhin aufweist:
wenigstens ein Fixierbauteil (150) ausgebildet zum Fixieren des Stators (100) an der Rückseite (21) des Waschbottichs (20), wobei das wenigstens eine Fixierbauteil (150) fixierend in der zweiten Aufnahmeöffnung (162) nach Durchtritt durch die wenigstens eine Fixieröffnung (161) aufgenommen ist, und wobei der Stator (100) aufweist:
einen Statorkörper (110) mit einer Kreisform und wenigstens eine Fixierrippe (140), die in Umfangsrichtung des Statorkörpers (110) angeordnet ist und von einer Seitenfläche des Statorkörpers (110) in Richtung Rückseite des Waschbottichs (20) vorsteht, wobei der wenigstens eine Fixierstift (142) von der wenigstens einen Fixierrippe (140) in Richtung Rückseite des Waschbottiches (120) vorsteht und die wenigstens eine Fixieröffnung (144b) gebildet ist durch Durchtritt durch eine Mitte des wenigstens einen Fixierstifts (142) durch einen Bereich des Statorkörpers (110), an welchem die Mitte des wenigstens einen Fixierstiftes (142) positioniert ist, und durch die wenigstens eine Fixierrippe (140).

2. Waschmaschine nach Anspruch 1, wobei der Waschbottich (20) eine von der Rückseite (21) des Waschbottiches in Richtung nach hinten vorstehende Tragrippe (160) aufweist, welche ausgebildet ist zum Stützen des Stators (100) durch Kontakt mit der wenigstens einen Fixierrippe (140), wenn der Stator (100) in einem fixierten Zustand ist, wobei die wenigstens eine erste Aufnahmeöffnung (161) und die wenigstens eine zweite Aufnahmeöffnung (162) an der Tragrippe (160) ausgebildet sind.

3. Waschmaschine nach Anspruch 1, wobei der Stator (100) aufweist:
einen Statorkörper (110) mit einer Kreisform;
eine Vielzahl von Statorzähnen (120), welche in Umfangsrichtung des Statorkörpers (110) angeordnet sind;
eine um die Vielzahl von Statorzähnen (120) gewickelte Spule (130), und
wenigstens ein Wasserdurchtrittsverhinderungsbauteil (170), welches von dem Statorkörper (110) vorsteht und ausgebildet ist zum Verhindern eines Durchtritts von Wasser in die Spule (130).

4. Waschmaschine nach Anspruch 3, wobei das wenigstens eine Wasserdurchtrittsverhinderungsbauteil (170) aufweist:
eine erste Wasserdurchtrittsverhinderungsrippe (171), die von einer Fläche des Statorkörpers (110) vorsteht, die der Rückseite (21) des Waschbottiches (20) zuweist in Richtung Rückseite (21) des Waschbottichs (20), wenn der Stator (100) an der Rückseite (21) des Waschbottichs (20) fixiert ist;
eine zweite Wasserdurchtrittsverhinderungsrippe (172) welche von der anderen Fläche des Statorkörpers (110) gegenüberliegend zu der einen Fläche des Statorkörpers (110) in umgekehrter Richtung zur ersten Wasserdurchtrittsverhinderungsrippe (171) vorsteht, wenn der Stator (100) an der Rückseite (21) des Waschbottichs (20) fixiert ist.

5. Waschmaschine nach Anspruch 3, wobei das wenigstens eine Wasserdurchtrittsverhinderungsbauteil (170) in Umfangsrichtung des Statorkörpers (110) angeordnet ist.

6. Waschmaschine nach Anspruch 1, wobei der Stator (100) aufweist:
einen Statorkörper (110) mit einer Kreisform;
eine Vielzahl von Statorzähnen (120), die in einer Umfangsrichtung des Statorkörpers (110) angeordnet sind;
eine um die Vielzahl von Statorzähnen (120) gewickelte Spule (130); und
ein Verbindergehäuse (180), welches einteilig mit dem Statorkörper (110) gebildet ist und in welches ein Verbinder (310), ausgebildet zur Leistungversorgung der Spule (130), eingesetzt ist.

7. Waschmaschine nach Anspruch 1, wobei der Stator (100) aufweist:
einen Statorkern (101);
einen Isolator (102a, 102b), welcher den Statorkern (101) abdeckt;
eine um den Isolator (102a, 102b) gewickelte Spule (130), und
ein Verbindergehäuse (180), welches einteilig mit dem Isolator (102b) gebildet ist und in welches ein Verbinder (310), ausgebildet zur Leistungsversorgung der Spule (130), eingesetzt ist.

8. Waschmaschine nach Anspruch 7, wobei der Isolator (102a, 102b) einen oberen Isolator (102a) und einen unteren Isolator (102b) aufweist, die zur Abdeckung des Statorkerns (101) von einer Oberseite und von einer Unterseite entsprechend ausgebildet sind, und wobei das Verbindergehäuse (180) einteilig mit einem von oberem Isolator (102a) oder unterem Isolator (102b) ausgebildet ist.

9. Waschmaschine nach Anspruch 8, welche weiterhin Verbindungsanschlüsse (190) aufweist, die aus Metall gebildet sind und elektrisch die Spule (130) mit dem Verbinder (310) verbinden, wobei die Verbindungsanschlüsse (190) in den Isolator (102a, 102b) eingesetzt sind.

## Revendications

1. Lave-linge (1) comprenant:
un corps (10);
une cuve (20) disposée à l'intérieur du corps (10); un tambour (30) disposé à rotation à l'intérieur de la cuve (20); et un moteur (40) couplé à une surface arrière (21) de la cuve (20) pour entraîner le tambour (30),
dans lequel le moteur (40) comprend:
un stator (100) et un rotor (200) disposés de manière rotative sur un côté intérieur ou sur un côté extérieur du stator (100)
ledit stator (100) comprenant au moins une goupille de fixation (142) insérée dans la surface arrière de la cuve (20)
ledit stator (100) comprenant en outre au moins un trou de fixation (144b) disposé concentriquement avec ladite au moins une goupille de fixation (142), ladite cuve (20) comprenant:
au moins un premier trou de logement (161) dans lequel la goupille de fixation (142) est introduite; et
au moins un second trou de logement (162) disposé concentriquement avec au moins un premier trou de logement (161), et configuré pour communiquer avec le au moins un trou de fixation (141) dans un état tel que ladite au moins une goupille de fixation (142) est insérée dans ledit au moins un premier trou de logement (161), et ledit lave-linge (1) comprenant de plus
au moins un élément de fixation (150) configuré pour fixer le stator (100) sur la surface arrière (21) de la cuve (20),
dans lequel ledit au moins un élément de fixation (150) est logé de manière fixe dans le second trou de logement (162) après avoir traversé ledit au moins un trou de fixation (161).
dans lequel le stator (100) comprend: un corps de stator (110) ayant une forme circulaire; et au moins une nervure de fixation (140) disposée dans une direction périphérique du corps de stator (110), et
faisait saillie d'une surface latérale du corps de stator (110) vers la surface arrière de la cuve (20),
dans lequel ladite au moins une goupille de fixation (142) dépasse de ladite au moins une nervure de fixation (140) vers la surface arrière de la cuve (20), et
dans laquelle ledit au moins un trou de fixation (144b) est formé en pénétrant à travers un centre de ladite au moins une goupille de fixation (142) à travers une partie du corps de stator (110) sur laquelle le centre de ladite au moins une goupille de fixation (142) est placé, et à travers ladite au moins une nervure de fixation (140).

2. Lave-linge (1) selon la revendication 1, dans lequel la cuve (20) comprend une nervure de support (160) faisant saillie de la surface arrière (21) de la cuve vers un côté arrière, et configurée pour supporter le stator (100) en faisant contact avec ladite au moins une nervure de fixation (140) lorsque le stator (100) est dans un état fixe,
dans lequel ledit au moins un premier trou de logement (161) et ledit au moins un second trou de logement (162) sont formés sur la nervure de support (160).

3. Lave-linge (1) selon la revendication 1, **caractérisé en ce que** le stator (100) comprend:
un corps de stator (110) ayant de forme circulaire;
une pluralité de dents de stator (120) disposés dans une direction circonférentielle du corps de stator (110);
une bobine (130) enroulée autour de la pluralité de dents de stator (120); et
au moins un élément empêchant la pénétration de l'eau (170) dépasse du corps du stator (110)
et configuré pour empêcher l'eau de pénétrer dans la bobine (130).

4. Lave-linge (1) selon la revendication 3, **caractérisé en ce que** ledit au moins un élément empêchant la pénétration de l'eau (170) comprend:
une première nervure de prévention de pénétration d'eau (171) dépassant d'une surface du corps de stator (110) qui fait face à la surface arrière (21) de la cuve (20) vers la surface arrière (21) de la cuve (20) lorsque le stator (100) est fixé sur la surface arrière (21) de la cuve (20);
et
une second nervure de prévention de pénétration d'eau (172) faisant saillie de l'autre surface du corps de stator (110) opposée à l'une des surfaces du corps de stator (110) dans une direction opposée à la première nervure de prévention de pénétration d'eau (171) lorsque le stator (100) est fixé sur la surface arrière (21) de la cuve (20).

5. Lave-linge (1) selon la revendication 3, dans lequel l'au moins un élément empêchant la pénétration de l'eau (170) est disposé dans la direction circonférentielle du corps du stator (110).

6. Lave-linge (1) selon la revendication 1, **caractérisé en ce que** le stator (100) comprend:
un corps de stator (110) ayant de forme circulaire;
une pluralité de dents de stator (120) disposés dans une direction circonférentielle du corps de stator (110);
une bobine (130) enroulée autour de la pluralité de dents de stator (120); et
un boîtier de connecteur (180) formé d'un seul tenant avec le corps de stator (110) et dans lequel un connecteur (310) configuré pour fournir de l'énergie à la bobine (130) est inséré.

7. Lave-linge (1) selon la revendication 1, **caractérisé en ce que** le stator (100) comprend:
un noyau de stator (101);
un isolant (102a, 102b) recouvrant le noyau du stator (101);
une bobine (130) enroulée autour de l'isolant (102a, 102b);
et un boîtier de connecteur (180) formé d'un seul tenant avec l'isolateur (102b) et dans lequel est inséré un connecteur (310) configuré pour alimenter la bobine (130).

8. Lave-linge linge (1) selon la revendication 7, **caractérisé en ce que**:
l'isolant (102a, 102b) comprend un isolant supérieur (102a) et un isolant inférieur (102b) qui sont configurés pour couvrir le noyau de stator (101) à partir d'un côté supérieur et d'un côté inférieur de celui-ci, respectivement, et
le boîtier de connecteur (180) est formé d'un seul tenant avec l'un des isolants supérieur (102a) et inférieur (102b).

9. Lave-linge (1) selon la revendication 8, comprenant en outre des bornes de connexion (190) constituées de métal configuré pour connecter électriquement la bobine (130) au connecteur (310),
dans laquelle les bornes de connexion (130) sont insérées dans l'isolant (102a, 102b).
